# EUROPÄISCHE PATENTSCHRIFT

(11) **EP 0 953 427 B1**
(45) Veröffentlichungstag und Bekanntmachung des Hinweises auf die Patenterteilung: **12.09.2001**
(21) Anmeldenummer: 99104991.7
(22) Anmeldetag: 12.03.1999
(51) Int. Cl.: B29C 51/26

(54) **Verstellbarer Spannrahmen für die Formstation einer Thermoformmaschine**
Adjustable clamping frame for a moulding station of a thermoforming machine
Cadre de fixation ajustable pour le poste de moulage d'une machine de thermoformage

(30) Priorität: 01.04.1998 DE 19814615
(43) Veröffentlichungstag der Anmeldung: 03.11.1999
(73) Patentinhaber: Adolf Illig Maschinenbau GmbH & Co, D-74081 Heilbronn (DE)
(72) Erfinder: Schwarzmann, Peter, 74081 Heilbronn (DE)

(56) Entgegenhaltungen:
- EP-A- 0 623 449
- EP-A- 0 882 566
- US-A- 2 891 466
- US-A- 5 167 969

## Beschreibung

Die Erfindung betrifft einen höhenbeweglichen Spannrahmen für die Formstation einer Thermoformmaschine zum Verformen einer erwärmten Platte aus thermoplastischem Kunststoff durch Differenzdruck nach dem Oberbegriff des Hauptanspruches. Eine solche Formstation weist in der Regel einen geschlossenen Blaskasten auf, an dessen Oberseite ein feststehender unterer Spannrahmen sitzt, der im Zusammenwirken mit einem höhenbeweglicher Spannrahmen die Platte einspannt. Um die Formstation für verschiedene Größen von Formteilen und damit Plattenzuschnitten verwenden zu können, ist es bekannt, beide Spannrahmen stufenlos verstellbar zu gestalten. So zeigt die DE 43 14 641 C 2 einen in zwei Richtungen stufenlos verstellbaren höhenbeweglichen offenen Spannrahmen, bestehend aus einem starren geschlossenen Außenrahmen und vier beweglichen Innenrahmen. Dabei sind zwei Stege des Innenrahmens starr ausgebildet, die zwei Querstege bestehen aus zwei oder drei Teilen, die teleskopartig aneinander verschiebbar sind.

Dieser bekannte obere Spannrahmen wird in der Weise eingesetzt, daß er auf dieselbe lichte Weite wie die lichte Weite des unteren Spannrahmens eingestellt wird, so daß oberer und unterer Spannrahmen die Platte zwischen sich einspannen.

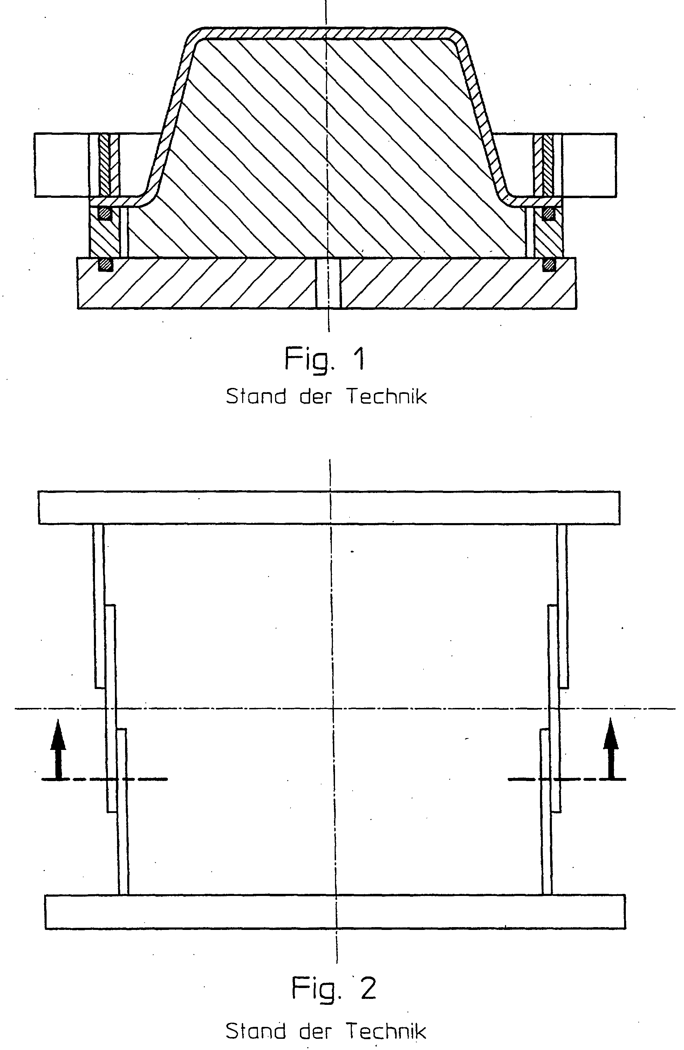

Um ein Formteil mittels Vakuum an die auf einem höhenverschiebbaren Tisch angeordnete Form ansaugen zu können, ist nach dem Hochfahren des Tisches eine Abdichtung. erforderlich, die das Leersaugen des Blaskastens bzw. das Ansaugen von Luft aus der Umgebung verhindert. Dies wird in bekannter Weise dadurch erreicht, daß Form oder Tisch gegen den unteren Spannrahmen abdichten, in dem dort eine Dichtung vorgesehen ist. Dieser Stand der Technik ist in den Figuren 1 und 2 ganz schematisch dargestellt, wobei die Querholme des oberen Spannrahmens dreigeteilt ausgebildet gezeichnet sind.

Dieser obere Spannrahmen hat den Nachteil, daß er nicht als Anschlag für die Tiefziehform dienen kann, d. h. Tisch bzw. Form fahren immer gegen den unteren Spannrahmen. Dieser muß folglich die ganze Schließkraft aufnehmen und muß deshalb entsprechend stabil ausgeführt sein. Wenn dieser untere Spannrahmen stufenlos verstellbar ausgebildet wird und er gleichzeitig einen Teil des geschlossenen Blaskastens bilden soll, ist dieser relativ labil, so daß er diese Kraft nicht aufnehmen kann oder er muß so stark dimensioniert werden, daß er von den Kosten her sehr teuer wird. Auch ist eine sehr gute Vakuumdichtheit in diesem Fall nur schwer zu erreichen.

Der Erfindung liegt die Aufgabe zugrunde, den oberen Spannrahmen so auszubilden, daß er als Anschlag für die Tiefziehform dienen kann und dabei ringsum einerseits eine Abdichtung zwischen Tiefziehform und Platte, andererseits eine Klemmung der Platte zusammen mit dem unteren Spannrahmen bewirkt.

Mit dem bekannten Spannrahmen ist im Bereich der Querholme eine solche doppelte Klemmung über die ganze Breite nicht gegeben. Auch wenn er über den unteren Spannrahmen nach innen vorstehend eingestellt wird, klemmt er im günstigsten Fall nur die Platte über die halbe Breite gegen die Form, zur anderen Hälfte die Platte gegen den unteren Spannrahmen. Zudem entscheidet die Vakuumdichtheit des unteren Spannrahmens über den zustandekommenden Ausformdruck (Vakuum).

Der obere Spannrahmen sollte des weiteren einfach im Aufbau sein und eine ausreichende Stabilität aufweisen, so daß er die Spannkräfte, hervorgerufen durch den Antrieb der Form, aufnehmen kann. Zusätzliche Abstützungen an den Querholmen sollten nicht erforderlich sein.

Zur Lösung der Aufgabe werden in Verbindung mit dem Merkmalen des Oberbegriff des Anspruchs 1 die kennzeichnenden Merkmale des Anspruches 1 vorgeschlagen.

Hinsichtlich vorteilhafter Weiterbildungen wird auf die Unteransprüche verwiesen.

Der Gegenstand der Erfindung wird nachfolgend anhand der schematischen Zeichnung näher beschrieben. Es zeigt:
- Figur 1 + 2: Schnitt und Draufsicht auf einen Spannrahmen gemäß des Standes der Technik
- Figur 3: einen Längsschnitt durch den Spannrahmen entlang der Linie A-A in Figur 5
- Figur 4: einen Querschnitt durch den Spannrahmen entlang der Linie B-B in Figur 5
- Figur 5: eine Draufsicht auf den Spannrahmen

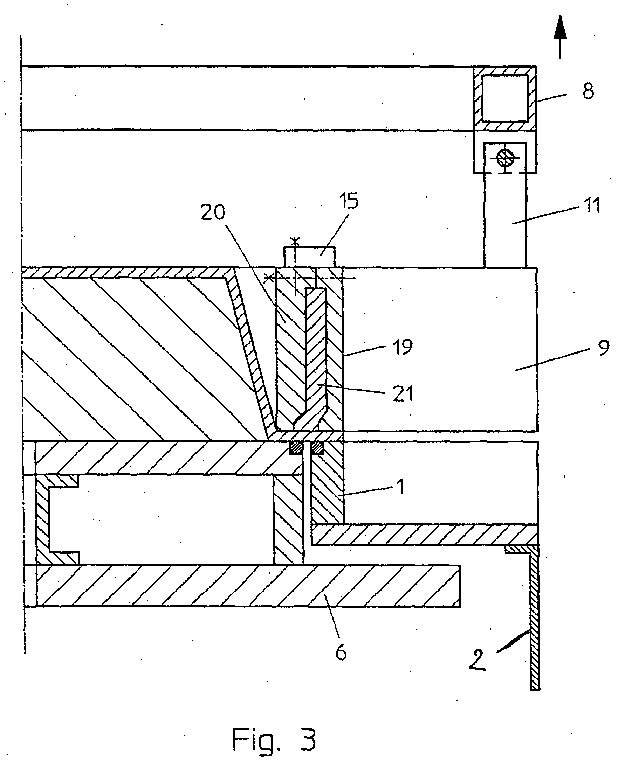

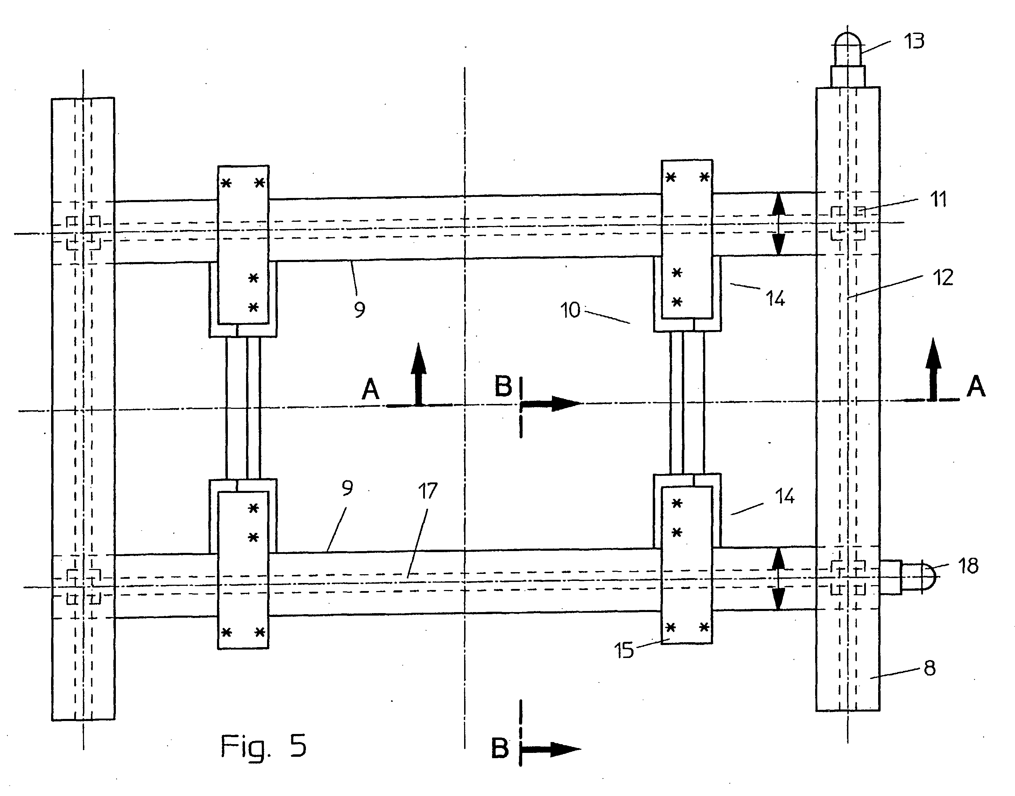

Ein unterer Spannrahmen 1 deckt den Blaskasten 2 in der Formstation einer Thermoformmaschine ab, mit der erwärmte Platten aus thermoplastischem Kunststoff mittels Differenzdruck unter Zuhilfenahme einer Form 4 zu Formteilen 5 tiefgezogen werden. Die Form 4 sitzt dazu auf einem höhenbeweglichen Tisch 6. In den Figuren 3 bis 5 ist der untere Spannrahmen 1 der Einfachheit halber als starrer Spannrahmen dargestellt, da sich die Erfindung auf die Gestaltung des oberen Spannrahmens 7 bezieht. Dieser untere Spannrahmen 1 kann selbstverständlich in bekannter Weise auch stufenlos verstellbar ausgebildet sein.

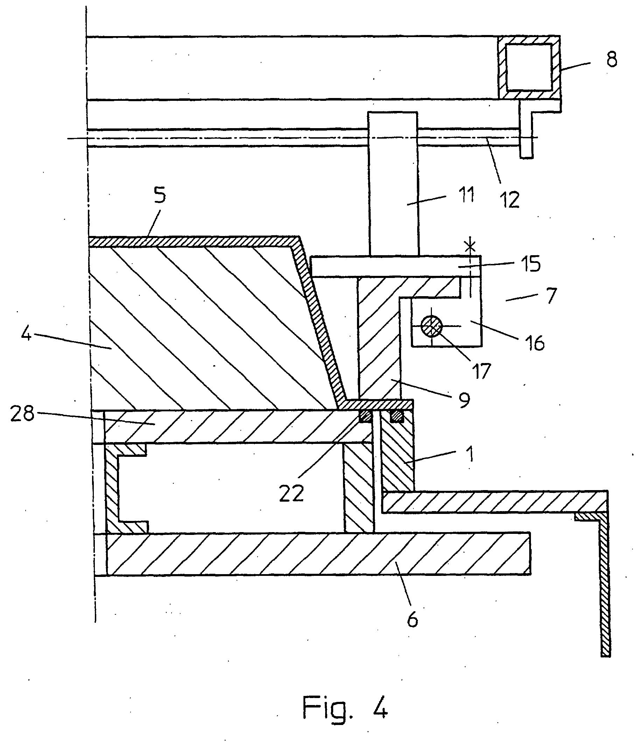

Der obere Spannrahmen 7 ist höhenbeweglich ausgeführt und dazu mit nicht dargestellten Antriebseinrichtungen sowie Führungseinrichtungen versehen. Er besteht aus zwei Querträgern 8, zwei Längsholmen 9 und zwei Querholmen 10. Die beiden Querträger 8 können zusätzlich mit Längsstegen verbunden sein, so daß ein Rahmen entsteht. Bei entsprechender Gestaltung der Führungen und des Antriebes sind diese Stege aber nicht erforderlich. Die Längsholme 9 sind einstückig aus einem Profil hergestellt und stehen über eine Lasche 11 mit je einer Gewindespindel 12 mit Rechts/Linksgewinde in Wirkverbindung, wobei beide Gewindespindeln 12 über einen nicht dargestellten Gleichlauf verbunden und mit einem Antrieb 13 versehen sind. Die Querholme 10 befinden sich zwischen den beiden Längsholmen 9 und sind mehrteilig aufgebaut. An den Längsholmen 9 sitzen Aufnahmen 14, die über eine Lasche 15 mit je einem Verstellstück 16 verbunden sind. Über eine Gewindespindel 17 mit Rechts/Linksgewinde, angetrieben vom Antrieb 18, können beide Verstellstücke 16 und damit die Querholme 10 im Abstand zueinander verstellt werden. Die beiden Gewindespindeln 17 beider Längsholme 9 sind dazu über einen nicht dargestellten Gleichlauf verbunden. Jede Aufnahme 14 ist zweigeteilt und besteht aus dem Klemmteil 19 und dem Klemmteil 20. Sie sind miteinander verbunden und so gestaltet, daß zwischen ihnen eine Nut verbleibt, in der ein Mittelholm 21 geführt und gehalten ist. Dieser Mittelholm 21 verläuft zwischen den beiden Aufnahmen 14 und ermöglicht so eine stufenlose Verstellung der beiden Längsholme 9 zueinander in einem bestimmten Bereich. Die Unterkanten von Mittelholm 21, Klemmteil 19 und Klemmteil 20 liegen auf derselben Höhe wie die untere Kante der Längsholme 9, so daß diese Teile eine Platte 3 einspannen können. Durch eine entsprechende Einstellung - wie sie in Figur 3 dargestellt ist - trifft dabei der Mittelholm 21 hälftig auf den Querholm des unteren Spannrahmens 1 und hälftig auf die Dichtung 22 an der Form 4 bzw.,wie dargestellt, an einer Formengrundplatte 28, die auf dem Tisch 6 befestigt ist. Ein Klemmteil 19 jeder Aufnahme 14 trifft dabei auf den Querholm des unteren Spannrahmens 1, jedes Klemmteil 20 auf die Dichtung 22 an Form 4 bzw. Tisch 6. Auf diese Weise ist eine Klemmung der Platte 3 über die ganze Länge des Querholmes 10 sowohl gegen den Spannrahmen 1 als auch gegen die Form 4 bzw. den Tisch 6 gegeben. Durch entsprechende Breiteneinstellung der Längsholme 9 ist diese doppelte Klemmung auch durch den Längsholm 9 gegeben, wie in Figur 4 dargestellt.

Mittelholm 21 und Klemmteile 19, 20 können so gestaltet sein, daß diese Teile gleitend zueinander geführt sind. Für einen besonders leichten Lauf mit der Möglichkeit einer Spieleinstellung können auch rollende Führungen in Form von mitlaufenden Nadelkäfigen zusätzlich vorgesehen sein.

## Patentansprüche

1. Höhenbeweglicher Spannrahmen für die Formstation einer Thermoformmaschine zum Verformen einer erwärmten Platte aus thermoplastischem Kunststoff durch Differenzdruck, mit einteiligen Längsstegen und Querstegen, die verstellbar zueinander ausgebildet sind zur Anpassung an verschiedene Plattengrößen, **gekennzeichnet durch** folgende Merkmale:
a) an den Längsholmen (9) sitzen je zwei an diesen in Längsrichtung stufenlos verstellbare Aufnahmen (14),
b) zwischen den beiden Aufnahmen (14) verläuft ein an diesen geführter Mittelholm (21), und
c) die Aufnahmen (14) erstrecken sich beiderseits des Mittelholms (21) und sind auf der der einzuspannenden Platte (3) zugewandten Fläche bündig mit diesem.

2. Spannrahmen nach Anspruch 1 **dadurch gekennzeichnet, daß** die Aufnahmen (14) aus zwei Klemmteilen (19, 20) bestehen, die zwischen sich eine Nut zur Aufnahme des Mittelholms (21) bilden.

## Claims

1. Height-adjustable clamping frame for the moulding station of a thermomoulding machine for deforming a heated plates of thermoplastic synthetic material by differential pressure, with integral longitudinal webs and transverse webs which are constructed to be adjustable relative to one another for adaptation to different plate sizes, **characterised by** the following features:
a) two receptacles (14) are seated at each of the longitudinal beams (9) to be steplessly adjustable at these in longitudinal direction,
b) a centre beam (21) runs between the two receptacle (14) and is guided at these, and
c) the receptacles extend at both sides of the centre beam (21) and are, on the surface remote from the plate (3) to be clamped, flush with that plate.

2. Clamping frame according to claim 1, **characterised in that** the receptacles (14) consist of two clamping members (19, 20) which form between them a groove for reception of the centre beam (21).

## Revendications

1. Cadre de serrage mobile en hauteur pour le poste de moulage d'une machine de thermoformage servant à mettre en forme une plaque chauffée en matière thermoplastique, par une différence de pression, avec des entretoises longitudinales et transversales en une seule pièce, qui sont réalisées réglables l'une par rapport à l'autre pour s'adapter aux différentes tailles de plaque,
**caractérisé en ce que**
a) sur les poutres longitudinales (9), chaque fois deux logements (14) sont montés réglables en continu dans la direction longitudinale
b) un longeron central (21) passe entre les deux logements (14) en étant guidé par ceux-ci et,
c) les logements (14) s'étendent de part et d'autre du longeron central (21) et sont à niveau avec lui, sur la surface tournée vers la plaque (3) à serrer.

2. Cadre de serrage selon la revendication 1,
**caractérisé en ce que**
les logements (14) sont formés de deux pièces de serrage (19, 20) qui forment entre elles une rainure pour recevoir le longeron central (21).
